# EUROPEAN PATENT APPLICATION

(11) **EP 4 757 487 A1**
(43) Date of publication of application: **10.06.2026**
(21) Application number: 24863228.3
(22) Date of filing: 05.09.2024
(51) Int. Cl.: H04W 76/14, H04W 8/00, H04W 8/22, H04W 4/70, H04W 4/80, H04W 76/22, G16Y 40/10, G16Y 40/30

(54) **CAPABILITY-BASED CONNECTION CONTROL METHOD AND ELECTRONIC DEVICE THEREFOR**

(30) Priority: 08.09.2023 KR 20230119536; 12.10.2023 KR 20230135716
(71) Applicant: Samsung Electronics Co., Ltd., Suwon-si, Gyeonggi-do 16677 (KR)
(72) Inventor: LIM, Changbeom, Suwon-si, Gyeonggi-do 16677 (KR); KIM, Kyungtae, Suwon-si, Gyeonggi-do 16677 (KR)
(74) Representative: HGF
(86) International application number: PCT/KR2024/013435
(87) International publication number: WO 2025/053649

(57) **Abstract**

An electronic device and a method for controlling a connection by an electronic device are disclosed. The electronic device may acquire audio data from an audio device and identify a task from the audio data. When a task capability is identified to be negative, the electronic device may control the audio device so that an external electronic device having a positive capability and the wireless audio device are connected.

## Description

### TECHNICAL FIELD

Embodiments disclosed herein relate to a method for controlling connection based on capability and an electronic device therefor.

### BACKGROUND

Techniques for controlling an electronic device based on a user's voice command are widely utilized. For example, an electronic device may acquire an utterance including a user's voice command. A voice agent of the electronic device may be configured to identify an intent of the user from the utterance of the user and perform an action corresponding to the identified intent. The user may control the electronic device by using the voice command related to control of the electronic device. For example, U.S. Patent Application Publication No. 2021/0005202 (published on Jan. 7, 2021) discloses control of a target device based on a voice command.

The foregoing information may be provided as related art for the purpose of assisting in understanding the disclosure. No assertion or determination is made as to whether any of the foregoing may be applied as prior art with respect to the disclosure.

### DISCLOSURE

### TECHNICAL SOLUTION

An electronic device according to an embodiment disclosed herein may include wireless communication circuitry, at least one processor electrically connected to the wireless communication circuitry, and memory. The memory may store instructions. The instructions, when individually or collectively executed by the at least one processor, may cause the electronic device to establish a first link with an audio device using the wireless communication circuitry, receive a voice command from the audio device, identify a task corresponding to the voice command, and identify a capability of the electronic device for the task. The instructions, when executed by the at least one processor, may cause the at least one processor to discover at least one external device using the wireless communication circuitry, based on capability of the electronic device being identified as negative, acquire capability of a first external device for the task from the first external device among the at least one external device, and control the audio device to be connected to the first external device based on the capability of the first external device for the domain or the task being identified as positive.

A method for controlling connection of an electronic device according to an embodiment disclosed herein may include: establishing a first link with an audio device; receiving a voice command from the audio device, identifying a domain or a task corresponding to the voice command, identifying a capability of the electronic device for the domain or the task, discovering at least one external device based on the capability of the electronic device being identified as negative, acquiring, from a first external device among the at least one external device, capability of the first external device for the domain or the task, and controlling the audio device to be connected with the first external device based on the capability of the first external device for the domain or the task being identified as positive.

A computer-readable storage medium according to an embodiment disclosed herein may store instructions that, when executed by a processor of an electronic device, cause the electronic device to perform said method for controlling connection of the electronic device.

### BRIEF DESCRIPTION OF THE DRAWINGS

FIG. 1 illustrates a communication environment of electronic devices according to an example embodiment.
FIG. 2 illustrates block diagrams of electronic devices according to an example embodiment.
FIG. 3 illustrates software modules of an electronic device according to an example embodiment.
FIG. 4 is a signal flowchart of a connection control method according to an example embodiment.
FIG. 5 is a flowchart of a method for determining task capability according to an example embodiment.
FIG. 6 is a flowchart of a connection control method based on capability according to an example embodiment.
FIG. 7 is a signal flowchart of a method for performing a task according to an example embodiment.
FIG. 8 is a signal flowchart of a connection control method according to an example embodiment.
FIG. 9 is a signal flowchart of a method for performing a task according to an example embodiment.
FIG. 10 illustrates an environment for performing a task according to an example embodiment.
FIG. 11 is a flowchart of a capability-based connection control method according to an example embodiment.
Fig. 12 is a block diagram illustrating an electronic device in a network environment according to various example embodiments
FIG. 13 is a block diagram illustrating an integrated intelligence system according to an example embodiment.
FIG. 14 is a diagram illustrating a form in which relationship information between concepts and actions is stored in a database according to an example embodiment.
FIG. 15 is a diagram illustrating a user terminal displaying a screen for processing a voice input received through an intelligent application, according to an example embodiment.

With regard to the description of the drawings, the same or similar components may be denoted by the same or similar reference numerals.

### DETAILED DESCRIPTION

Hereinafter, various embodiments of the present invention will be described with reference to the accompanying drawings. However, it should be understood that this is not intended to limit the present invention to a particular embodiment, and includes various modifications, equivalents, and/or alternatives of the embodiments of the present invention.

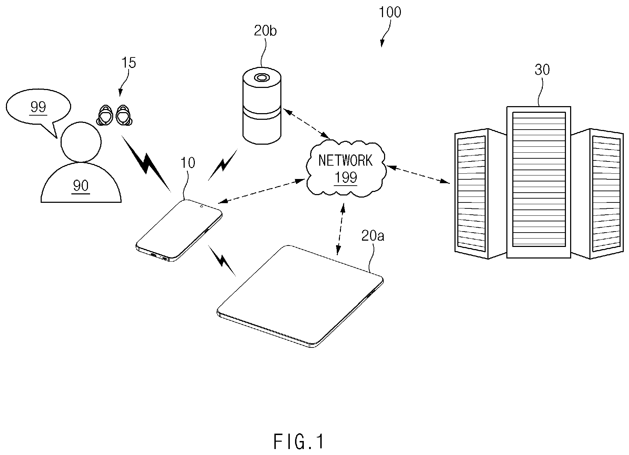

FIG. 1 illustrates a communication environment of electronic devices according to an example embodiment.

Referring to FIG. 1, a communication environment 100 of an example may include an electronic device 10, a wireless audio device 15, a first external electronic device 20a, a second external electronic device 20b, and/or a server device 30. In the example of FIG. 1, the wireless audio device 15, the first external electronic device 20a, and second external electronic device 20b may be located nearby the electronic device 10. For example, the electronic device 10 may be configured to communicate with the wireless audio device 15, the first external electronic device 20a, and/or the second external electronic device 20b based on short-range communication (e.g., Bluetooth, wireless fidelity (Wi-Fi) direct, infrared data association, ultra-wideband (UWB) communication, or neighbor awareness networking).

In an example, a user 90 may wear the wireless audio device 15 (e.g., a wireless headset, a wireless earbud, or a true wireless system (TWS)). The wireless audio device 15 may be connected to the electronic device 10 based on the short-range wireless communication. For example, the user 90 may utter a voice command 99. The voice command 99 may include, for example, an intent corresponding to a specific task. The audio device 15 may receive the voice command 99 and transmit audio data including the received voice command 99 to the electronic device 10.

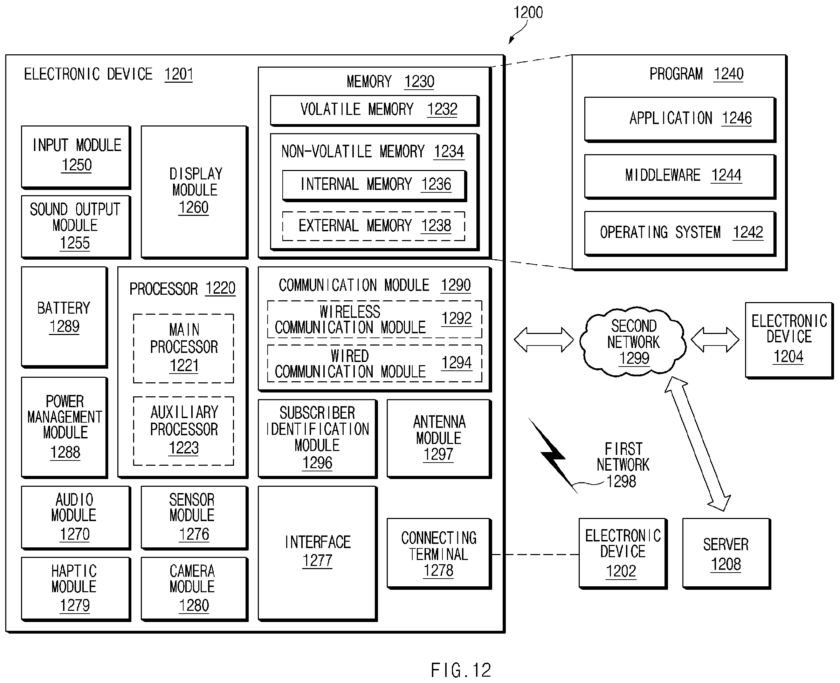

In response to receiving the audio data, the electronic device 10 may determine capability to perform the task corresponding to the voice command 99. In an example, the electronic device 10 may be unable to perform the task. For example, communication between the electronic device 10 and the server device 30 may be required to perform the task. When the electronic device 10 is unable to connect to the network 199 (e.g., the internet protocol network or the network 1299 of FIG. 12), the electronic device 10 may be unabled to perform the task corresponding to the voice command 99.

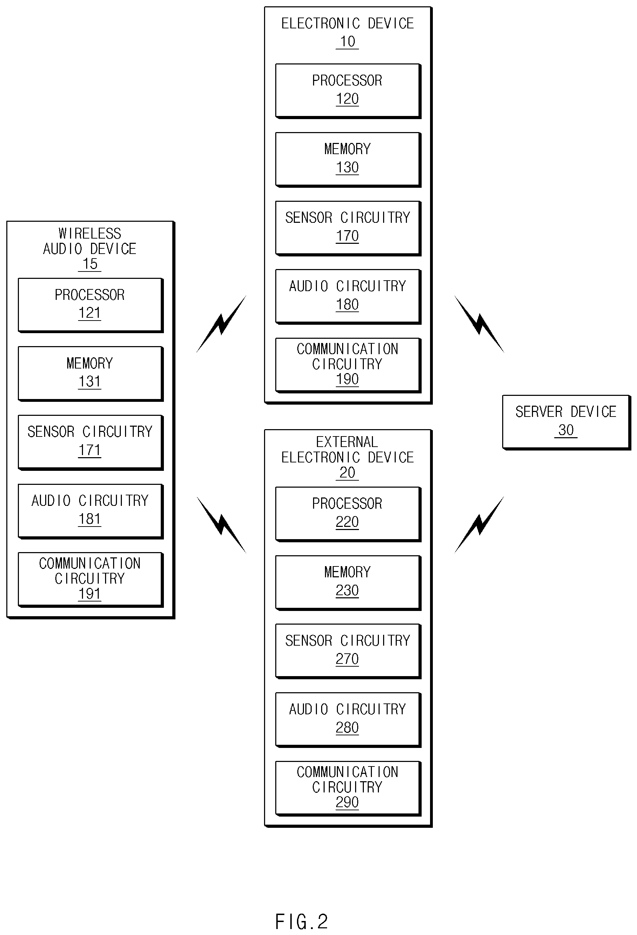

According to an embodiment, the electronic device 10 may control connections of the wireless audio device 15 such that the task corresponding to the voice command 99 is performed by a nearby device (e.g., the first external electronic device 20a and/or the second external electronic device 20b). The electronic device 10 may control connections of the wireless audio device 15 based on capability of nearby devices for the task. For example, when capability of the first external electronic device 20a for the task is identified as positive, the electronic device 10 may control connections of the wireless audio device 15 such that it is connected to the wireless audio device 15. Hereinafter, with reference to FIGS. 2 to 15, a method for controlling the connection of the wireless audio device 10 may be described. The electronic device 10 of the disclosure may improve user convenience by controlling the connection of the wireless audio device 10 based on the capability. For example, the electronic device 10 may reduce the number of inputs of the user 90 for switching connections.

In the example of FIG. 1, the illustrated shapes of the wireless audio device 15, the electronic device 10, the first external electronic device 20a, the second external electronic device 20b, and the server device 30 are mere exemplary, and embodiments of the disclosure are not limited thereto. The wireless audio device 15 may be any device configured to perform wireless communication with the electronic device 10 and perform output and reception of audio data. In one example, the wireless audio device 15 may be a wearable device. The electronic device 10 may be a device owned by the user 90 and may be any device configured to perform communication with the wireless audio device 15. The first external electronic device 20a and the second external electronic device 20b may be any electronic devices associated with the same account as the electronic device 10 (e.g., an account of the user 90). The first external electronic device 20a or the second external electronic device 20b can be any electronic devices located in the vicinity of the electronic device 10 and configured to perform short-range wireless communication with the electronic device 10. In one example, the second external electronic device 20a and/or the server device 30 may be omitted from the communication environment 100.

FIG. 2 illustrates block diagrams of electronic devices according to an example embodiment.

Referring to FIGS. 1 and 2, according to an embodiment, the electronic device 10 may include a processor 120, memory 130, a sensor circuitry 170, audio circuitry 180, and/or communication circuitry 190. For example, the electronic device 10 may include components similar to those of the electronic device 1201 of FIG. 12. The structure of the electronic device 10 illustrated in FIG. 2 is illustrative, and embodiments of the disclosure are not limited thereto. For example, the electronic device 10 may further include a component (e.g., a component of the electronic device 1201 in FIG. 12) not illustrated in FIG. 2. For example, the electronic device 10 may not include at least some of the components illustrated in FIG. 2.

The processor 120 may include at least one processing circuitry. For example, the processor 120 may control various components of the electronic device 10 to perform various operations. For example, the processor 1220 may correspond to the processor 1220 of FIG. 12. For example, operations of the electronic device 10 described below may be referred to as being performed by the processor 120. The processor 120 may be configured to perform various operations of the electronic device 10 by executing one or more instructions stored in the memory 130. The processor 120 may control the electronic device 10 to perform various actions by executing the instructions stored in the memory 130. The processor 120 may include one processor or a plurality of processors. In one example, the processor 120 may be implemented as one chipset.

The processor 120 may be electrically, operatively, or functionally connected to the memory 130, the sensor circuitry 170, the audio circuitry 180, and/or the communication circuitry 190. In the disclosure, when one component is "operatively" connected to another component, it may mean that the one component is connected to enable the other component to operate. For example, the one component may enable the other component to operate by transmitting a control signal to the other component directly or through another component. In the disclosure, when the one component is "functionally" connected to the other component, it may mean that the one component may execute function of the other component. For example, the one component may execute the functions of the other component by transmitting a control signal to the other component directly or through another component.

The sensor circuitry 170 may include at least one sensor configured to sense context information of the electronic device 10. For example, the sensor circuitry 170 may correspond to the sensor module 1276 and/or the camera module 1280 of FIG. 12. In one example, the sensor circuitry 170 may include a proximity sensor configured to sense a proximate object. The processor 120 may identify a blockage by an object external to the electronic device 10 using the proximity sensor. In one example, the sensor circuitry 170 may include an illuminance sensor configured to sense ambient illuminance. The processor 120 may identify a blockage of the electronic device 10 using the illuminance sensor. In one example, the sensor circuitry 170 may include a grasp sensor. The processor 120 may identify a grip on the electronic device 10 using the grip sensor. In one example, the sensor circuitry 170 may include a camera. The processor 120 may obtain an image using the camera and may identify a surrounding situation of the electronic device 10 based on the obtained image. In one example, the sensor circuitry 170 may include at least one of the proximity sensor, the illuminance sensor, the grip sensor, or the camera. The processor 120 may be configured to identify the context information of the electronic device 10 based on a combination of at least some of the data obtained from the sensor circuitry 170.

The audio circuitry 180 may include at least one circuitry for inputting and/or outputting audio data. For example, the audio circuitry 180 may include the at least one microphone and/or the at least one speaker. The audio circuitry 180 may correspond to, for example, the audio module 1270 of FIG. 12. In an example, the audio circuitry 180 may be omitted from the electronic device 10.

The communication circuitry 190 may be configured to perform short-range wireless communication and/or long-range wireless communication. For example, the communication circuitry 190 may correspond to the communication module 1290 of FIG. 12. The processor 120, for example, may communicate with the wireless audio device 15 and/or the external electronic device 20 based on short-range wireless communication (e.g., Bluetooth, a neighbor awareness network, or WiFi direct) using the communication circuitry 190. For example, the processor 120 may communicate with the server device 30 via an IP network (e.g., the network 199 of FIG. 1) using the communication circuitry 190. In one example, the communication circuitry 191 may have limited functionality. For example, the processor 120 may deactivate the communication function with the server device 30 of the communication circuitry 190.

According to an embodiment, the wireless audio device 15 may include a processor 121, memory 131, sensor circuitry 171, audio circuitry 181, and/or communication circuitry 191. For example, the wireless audio device 15 may have components similar to those of the electronic device 1201 of FIG. 12. The components of the wireless audio device 15 illustrated in FIG. 2 is illustrative, and embodiments of the disclosure are not limited thereto. For example, the wireless audio device 15 may further include a component (e.g., a component of the electronic device 1201 in FIG. 12) not illustrated in FIG. 2. For example, the wireless audio device 15 may not include at least some of the components illustrated in FIG. 2.

The processor 121 may include at least one processing circuitry. For example, the processor 121 may control various components of the wireless audio device 15 to perform various operations of the wireless audio device 15. For example, the processor 121 may correspond to the processor 1220 of FIG. 12. For example, operations of the wireless audio device 15 described below may be referred to as being performed by the processor 121. The processor 121 may be configured to perform various operations of the wireless audio device 15 by executing one or more instructions stored in the memory 131. The processor 121 may control the wireless audio device 15 to perform the various operations by executing the instructions stored in the memory 131. The processor 121 may include one processor or a plurality of processors. In one example, the processor 121 may be implemented as one chipset. The processor 121 may be electrically, operatively, or functionally connected with the memory 131, the sensor circuitry 171, the audio circuitry 181, and/or the communication circuitry 191.

The sensor circuitry 171 may include at least one sensor configured to sense contextual information of the wireless audio device 15. For example, the sensor circuitry 171 may correspond to the sensor module 1276 of FIG. 12. In one example, the sensor circuitry 171 may include a proximity sensor configured to sense a proximity object. The processor 121 may use the proximity sensor to identify a blockage of the wireless audio device 15 by an object external. In one example, the sensor circuitry 171 may include an illuminance sensor configured to sense ambient illuminance. The processor 121 may use the illuminance sensor to identify a blockage of the wireless audio device 15. In an example, the processor 121 may be configured to sense, using the sensor circuitry 171, whether the wireless audio device 15 is worn. In one example, the sensor circuitry 171 may include a touch sensor configured to sense touch input and/or a motion sensor configured to sense movement of the wireless audio device 15.

The audio circuitry 181 may include at least one circuitry for inputting and/or outputting audio data. For example, the audio circuitry 181 may include the at least one microphone and/or the at least one speaker. The audio circuitry 181 may correspond to, for example, the audio module 1270 of FIG. 12. In an example, the processor 121 may output audio data received from the electronic device 10 using the audio circuitry 181. The processor 121 may transmit the audio data acquired by using the audio circuitry 181 to the electronic device 10.

The communication circuitry 191 may be configured to perform short-range wireless communication. For example, the communication circuitry 191 may correspond to the communication module 1290 of FIG. 12. The processor 121, for example, may communicate with the electronic device 10 and/or the external electronic device 20 based on the short-range wireless communication (e.g., Bluetooth, a neighbor awareness network, or WiFi direct) using the communication circuitry 191. Hereinafter, the wireless audio device 15 may be a device having a pairing history with the electronic device 10 and the external electronic device 20. It may be assumed that the electronic device 10 and the external electrical device 20 store information for connection with the wireless audio device 15.

According to an embodiment, the external electronic device 20 may include a processor 220, memory 230, sensor circuitry 270, audio circuitry 280, and/or communication circuitry 290. For example, the external electronic device 20 may correspond to the first external electronic device 20a or the second external electronic device 20b of FIG. 1. Hereinafter, the external electronic device 20 may be assumed to be an external electronic device, among the first external electronic device 20a and the second external electronic device 20b, capable of performing a task corresponding to the voice command 99 of FIG. 1.

For example, the external electronic device 20 may include components similar to those of the electronic device 1201 of FIG. 12. The components of the external electronic device 20 illustrated in FIG. 2 is illustrative, and embodiments of the disclosure are not limited thereto. For example, the external electronic device 21 may further include a component (e.g., a component of the electronic device 1201 in FIG. 12) not illustrated in FIG. 2. For example, the external electronic device 20 may not include at least some of the components illustrated in FIG. 2.

The processor 220 may include at least one processing circuitry. For example, the processor 220 may control various components of the external electronic device 20 to perform various operations. For example, the processor 220 may correspond to the processor 1220 of FIG. 12. For example, operations of the external electronic device 20 described below may be referred to as being performed by the processor 220. The processor 220 may be configured to perform various operations of the external electronic device 20 by executing one or more instructions stored in the memory 230. The processor 220 may control the external electronic device 20 to perform the various operations by executing the instructions stored in the memory 230. The processor 220 may include one processor or a plurality of processors. In an example, the processor 220 may be implemented as one chipset. The processor 220 may be electrically, operatively, or functionally connected to the memory 230, the sensor circuitry 270, the audio circuitry 280, and/or the communication circuitry 290.

The sensor circuitry 270 may include at least one sensor configured to sense context information of the external electronic device 20. For example, the sensor circuitry 270 may correspond to the sensor module 1276 and/or the camera module 1280 of FIG. 12. In one example, the sensor circuitry 270 may include a proximity sensor configured to sense a proximate object. The processor 220 may identify a blockage by an external object of the external electronic device 20 using the proximity sensor. In one example, sensor circuitry 270 may include an illuminance sensor configured to sense ambient illuminance. The processor 220 may identify a blockage of the external electronic device 20 using the illuminance sensor. In one example, the sensor circuitry 270 may include a grasp sensor. The processor 220 may identify a grip on the external electronic device 20 using the grasp sensor. In one example, the sensor circuitry 270 may include a camera. The processor 220 may obtain an image by using the camera and may identify a surrounding situation of the external electronic device 20 based on the obtained image. In one example, the sensor circuitry 270 may include at least one of the proximity sensor, the illuminance sensor, the grasp sensor, or the camera. The processor 220 may be configured to identify the context information of the external electronic device 20 based on a combination of at least some of the data obtained from the sensor circuitry 270.

The audio circuitry 280 may include at least one circuitry for inputting and/or outputting audio data. For example, the audio circuitry 280 may include at least one microphone and/or at least one speaker. The audio circuitry 280 may correspond to, for example, the audio module 1270 of FIG. 12. In an example, the audio circuitry 280 may be omitted from the external electronic device 20.

The communication circuitry 290 may be configured to perform short-range wireless communication and/or long-range wireless communication. For example, the communication circuitry 290 may correspond to the communication module 1290 of FIG. 12. The processor 220, for example, may communicate with the wireless audio device 15 and/or the electronic device 10 based on the short-range wireless communication (e.g., Bluetooth, a neighbor awareness network, or WiFi direct) using the communication circuitry 290. The processor 220, for example, may communicate with the server device 30 via an IP network (e.g., the network 199 of FIG. 1) using the communication circuitry 290. In an example, the communication circuitry 290 may have limited functionality. For example, the processor 220 may deactivate a communication function of the communication circuitry 291, the communication function being for communicating with the server device 30.

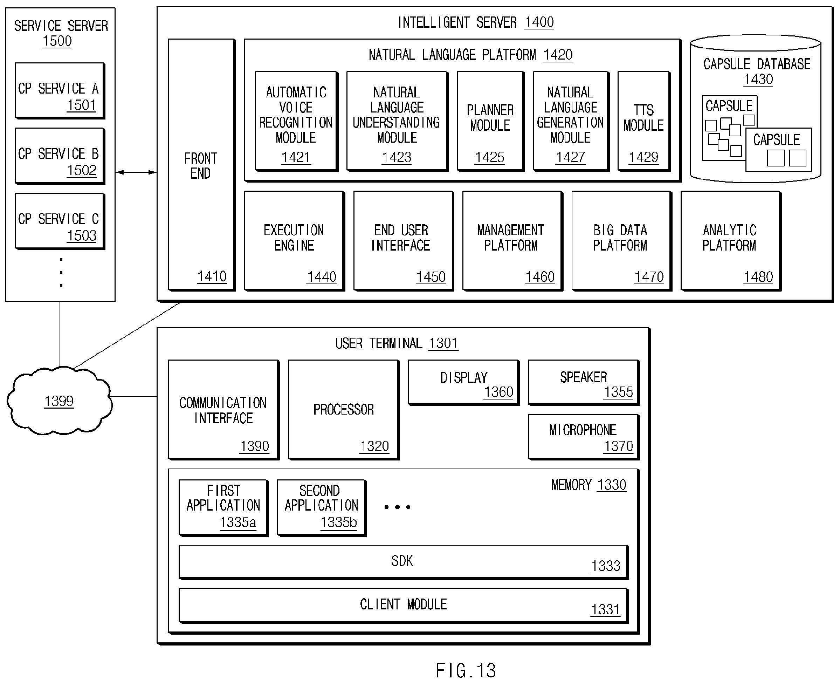

According to an embodiment, the server device 30 may communicate with the electronic device 10 and/or the external electronic device 20 through a network (e.g., the network 199 of FIG. 1). The server device 30 may include, for example, an intelligent server (e.g., the intelligent server 1400 of FIG. 13) for processing the voice command 99.

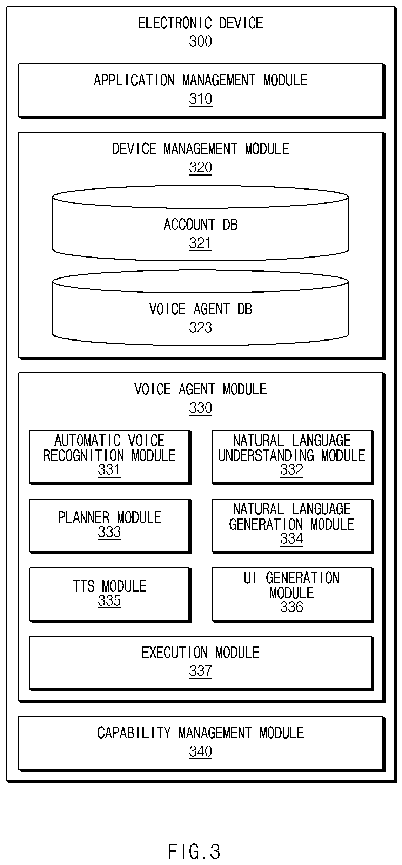

FIG. 3 illustrates software modules of an electronic device according to an example embodiment.

Referring to FIGS. 2 and 3, the electronic device 300 according to an embodiment may include at least one of an application management module 310, a device management module 320, a voice agent module 330, or a capability management module 340. At least some of the modules described in relation to FIG. 3 may be implemented by each of the electronic device 10, the external electronic device 20, or the server device 30. Hereinafter, the modules of the electronic device 300 may be referred to as software modules implemented by a processor of the electronic device 300. Operations described below in connection with the modules of the electronic device 300 may be referred to as operations performed by the processor of the electronic device 300

For example, the application management module 310 may be configured to manage information about applications, service packages, capsules, and/or domains installed at the electronic device 300. A service package may be referred to as a program for providing a specified service. A capsule (e.g., a capsule in the capsule database 1430 of FIG. 13) may include a plurality of action objects (or action information) and/or concept objects (or concept information) included in a plan. For example, a capsule may be mapped to a domain. The domain may correspond to a category (or service) associated with an action (or function) that the user wants to execute using the electronic device 300. In one example, domains may be classified according to services (e.g., applications) associated with texts. For example, the texts may include texts recognized from a user's command (e.g., a voice command) or an intent corresponding to the recognized text. In one example, the domain may be related to the user's intent corresponding to the text. In one example, the domain may be determined through a natural language analysis of an input user command. For example, the electronic device 300 may identify a service corresponding to the determined domain. The domain may be divided according to, for example, an application receiving the voice input and/or a type of service to be provided based on the voice input, but is not limited thereto. In one example, there may be a plurality of capsules mapped to one domain.

For example, the device management module 320 may be configured to manage information of external electronic devices. For example, when the device management module 320 is implemented in the electronic device 10, the device management module 320 of the electronic device 10 may manage information of the external electronic device 20. The information of the external electronic device may include an account database 321 and/or a voice agent database 323.

The account database 321 may store information of devices associated with the same account as the electronic device 300. For example, the account database 321 may store information about devices registered with the same account as the electronic device 300. The account database 321 may include identification information (e.g., a device name and/or a unique identifier) and type information (e.g., a generic device name or a named entity) of devices associated with the same account. The account database 321 may include information about data network connectivity of devices associated with the same account.

The voice agent database 323 may store information related to voice agents of devices associated with the same account as the electronic device 300. For example, the information related to voice agents may include information on the executability of the voice agents of the devices associated with the same account. The information on the executability may include, for example, information indicating installation of the voice agent and/or information indicating activation or deactivation of the voice agent. For example, the information on the executability may include information on functions that may be performed by the voice agent. The information on the executability may include information on the capsule, the service, or the domain installed in a corresponding device. In an example, the voice agent database 323 may be implemented as one database with the account database 321.

For example, the voice agent module 330 may be configured to process a user's voice command. The voice agent module 330 may include an automatic voice recognition module 331, a natural language understanding module 332, a planner module 333, a natural language generation module 334, a text-to-speech (TTS) module 335, a user interface (UI) generation module 336, and/or an execution module 337. For example, the voice agent module 330 may correspond to the natural language platform 1420 and/or the execution engine 1440 of FIG. 13.

The automatic voice recognition module 331 may be configured to convert audio data into text data. For example, the automatic voice recognition module 331 may correspond to the automatic speech recognition module 1421 of FIG. 13.

The natural language understanding module 332 may be configured to identify an intent and/or a parameter (e.g., an entity and/or a slot) based on text data corresponding to the voice data. The intent may include information indicating an action (or a function) (e.g., a task) to be executed using the device. The slot may be detailed information related to the intent. The slot may be acquired based on a domain corresponding to an utterance. The slot may be variable information required to perform an action. In an example, the variable information constituting the slot may include a named entity. For example, the natural language understanding module 332 may correspond to the natural language understanding module 1423 of FIG. 13.

The planner module 333 may be configured to generate a plan using the intent and/or the parameter identified by the natural language understanding module 332. For example, the planner module 333 may identify at least one domain necessary to perform a task based on the determined intent. The planner module 333 may determine a plurality of actions and/or a sequence of a plurality of actions included in each of the identified at least one domain to perform the task. The planner module 333 can generate the plan using information (e.g., at least one capsule) stored in a capsule database in which sets of relationships between concepts and actions are stored. The planner module 333 may correspond to the planner module 1425 of FIG. 13.

The natural language generation module 334 may convert specified information into a text form. The information converted into the text form may be in a form of a natural language utterance. The TTS module 335 may convert the information in the text form into information in a voice form. The natural language generation module 334 and the TTS module 335 may correspond to the natural language generation module 1427 and the text-to-speech conversion module 1429 of FIG. 13, respectively.

The user interface (UI) generation module 336 may generate a UI for execution of a task indicated by a voice command. For example, the UI generation module 336 may generate a graphical UI to be provided to the user by using graphical resources stored in the electronic device 300. For example, the UI generation module 336 may generate a UI indicating execution processes of a plan and/or an execution result of the plan (e.g., a result executed by the execution module 337). In an example, the UI may include text information generated by the natural language generation module 334. The text information may include, for example, interactive information corresponding to the user's voice command.

The execution module 337 may calculate a result using the generated plan. The execution module 337 may perform a task by performing a series of actions according to the plan. The execution module 338 may correspond to the execution engine 1440 of FIG. 13.

For example, the capability management module 340 may be configured to determine capability for the task of the electronic device 300. For convenience of description, examples of a case in which the modules of the electronic device 300 are implemented in the electronic device 10 may be described.

The electronic device 10 may obtain audio data including a user's utterance from the wireless audio device 15. The wireless audio device 15 may obtain an audio signal corresponding to the user's utterance based on voice activity detection (VAD) or a touch input. The wireless audio device 15 may the transmit audio data (e.g., digitized data of the audio signal) corresponding to the audio signal to the electronic device 10 using the communication circuitry 191. The electronic device 10 may obtain the audio data using the communication circuitry 190.

The electronic device 10 may identify a task corresponding to the audio data by using the automatic voice recognition module 331 and the natural language understanding module 332. The capability management module 340 may identify the capability of the electronic device 10 for the identified task. The capability management module 340 may identify the capability based on at least one of an application (e.g., an application, a service package, a domain, and/or a capsule) for performing the task, availability of a network (e.g., the network 199 of FIG. 1), context information of the electronic device 10, contents stored on the electronic device 10, or on-device processing capability.

For example, the task may be a task associated with a specific application. The capability management module 340 may obtain application information installed in the electronic device 10 by using the application management module 310. When the specific application is not installed in the electronic device 10, the capability management module 340 may identify the capability as negative. When the specific application is installed in the electronic device 10, the capability management module 340 may identify the capability as positive.

For example, the task may be a task that requires a network connection. The task may require a connection to the server device 30 or a connection to a remote end. The capability management module 340 may identify a connectivity of the network. When the electronic device 10 is connectable to the network, the capability management module 340 may identify the capability as positive. When the electronic device 10 is not connectable to the network, the capability management module 340 may identify the capability as negative.

For example, the task may be for playback of specified content (e.g., a stored recording file, a sound file, a music file, a still image file, or a moving image file). When the electronic device 10 does not store the specified content, the capability management module 340 may identify the capability as negative. When the electronic device 10 stores the specified content, the capability management module 340 may identify the capability as positive.

For example, the task may be for playback of multimedia content. The capability management module 340 may obtain context information (e.g., blockage information) of the electronic device 10 using the sensor circuitry 170 of the electronic device 10. When a display of the electronic device 10 is blocked, the capability management module 340 may identify the capability as negative. When the electronic device 10 is gripped by a user even though the electronic device 10 is blocked, the capability management module 340 may identify the capability as positive.

The on-device processing capability may be referred to as the capability of the electronic device 10 to process audio data and corresponding tasks without the help of the server device 30. For example, the voice agent module 330 of the electronic device 10 may be deactivated. By the user deactivating the voice agent application, the voice agent module 330 may be deactivated. In this case, the on-device processing capability may be identified as negative. For example, the voice agent module 330 of the electronic device 10 does not include at least some components (e.g., the planner module 333) for executing the task. The electronic device 10 may be configured to transmit audio data or text data corresponding to the audio data to the server device 30 and receive a plan from the server device 30. In this case, the on-device processing capability may be identified as negative. In one example, when the on-device processing capability is negative, the capability management module 340 may identify the capability as negative.

For example, the on-device processing capability may be set differently depending on domains. As an example, the on-device processing capability for a first domain may be set to be negative, but the on-device processing capability for a second domain may be set to be positive. The electronic device 10 may perform natural language understanding on the audio data and identify a domain corresponding to the audio data from the text data for the audio data. When the identified domain corresponds to an on-device processing capable domain, the electronic device 10 may identify the on-device processing capability as positive.

Although examples of the electronic device have been described, a person having an ordinary skill in the art may understand that the external electronic device 20 may also determine capability of the external electronic device 20 in a similar manner.

The components of the electronic device 300 described above with reference to FIG. 3 is an example, and embodiments of the disclosure are not limited thereto. For example, the electronic device 300 may not include at least some of the illustrated components. For example, at least some of the components of the electronic device 300 may be implemented by another device.

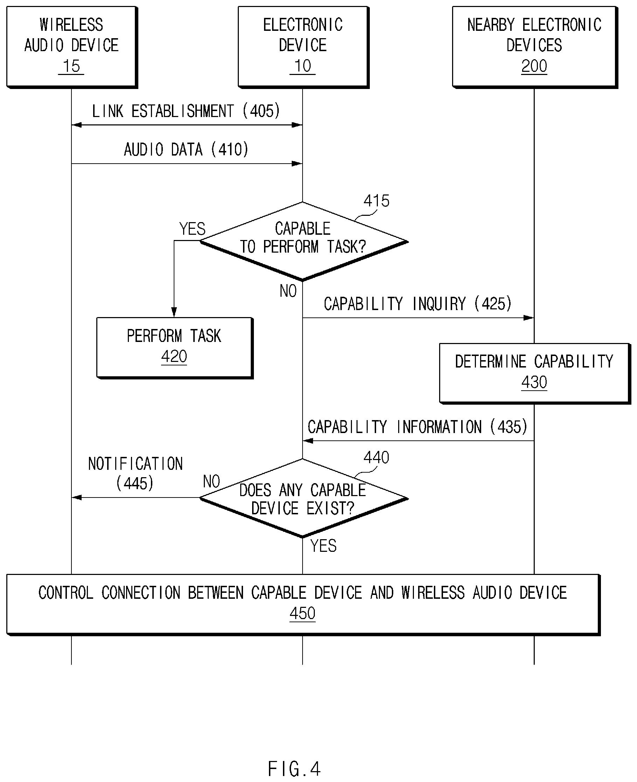

FIG. 4 is a signal flowchart of a connection control method according to an example embodiment.

Referring to FIGS. 2 and 4, according to an embodiment, the electronic device 10 may control connection of the wireless audio device 15 based on capability. In the example of FIG. 4, the nearby electronic devices 200 may be referred to as devices (e.g., the first external electronic device 20a, the second external electronic device 20b of FIG. 1, and the external electronic device 20 of FIG. 2) associated with the same account as the electronic device 10. The electronic device 10 and the nearby electronic devices 200 may be assumed to be devices having a history of being paired with the wireless audio device 15.

In the following embodiments, the operations may be performed sequentially, but not necessarily sequentially. For example, the order of the operations may be changed, and at least two operations may be performed in parallel.

In operation 405, the wireless audio device 15 may establish a link with the electronic device 10 using the communication circuitry 191. For example, the wireless audio device 15 may established the link with the electronic device 10 based on a Bluetooth protocol. In an example, the wireless audio device 15 establishes the link with the electronic device 10 most recently connected among devices (e.g., the electronic device 10 and the nearby electronic devices 200) having a connection history. The electronic device 10 may establish the link with the wireless audio device 15 using the communication circuitry 190.

In operation 410, the electronic device 10 may obtain audio data from the wireless audio device 15. The electronic device 10 may receive the audio data from the wireless audio device 10 via the established link. For example, the electronic device 10 may obtained the audio data including a user's utterance from the wireless audio device 15. Wireless audio device 15 may obtain an audio signal corresponding to the user's utterance. Wireless audio device 15 may transmit the audio data corresponding to the audio signal to the electronic device 10 using communication circuitry 191. The electronic device 10 may obtain the audio data using communication circuitry 190. In an example, the wireless audio device 15 may recognize a wake-up word (e.g., "high Bixby") in a portion of the input user's utterance. When the wake-up word is recognized, the wireless audio device 15 may induce the electronic device 10 to activate a voice service function and wait for reception of the audio data. After the wake-up word is recognized, the wireless audio device 15 may deliver the audio data 410 corresponding to the input user's utterance to the electronic device 10.

In operation 415, the electronic device 10 may determine whether the task corresponding to the audio data can be performed. When the voice agent module (e.g., the voice agent module 330 of FIG. 3) is deactivated, the electronic device 10 may determine that the task is not capable to be performed.

In an example, the electronic device 10 may identify a task by performing speech recognition (e.g., using the automatic voice recognition module 331 of FIG. 3) and natural language understanding (e.g., using the natural language understanding module 332 of FIG. 3) on audio data. The electronic device 10 may identify capability for the task according to the examples described above in connection with the capability management module 340 of FIG. 3. When the capability is negative, the electronic device 10 may determine that the task is not performable. When the capability is positive, the electronic device 10 may determine the task is performable.

For example, the voice command included in the voice data may be "turn on the air conditioner". The electronic device 10 may identify whether an application for controlling the air conditioner is installed, for example, by using the application management module 310 of FIG. 3. When the application for controlling the air conditioner is not installed, the electronic device 10 may determine that the task cannot be performed.

For example, the voice command included in the voice data may be "send a text". The electronic device 10 may be in a state in which a network connection for transmitting a text is limited. In this case, the electronic device 10 may determine that the task cannot be performed.

When the task is performable (e.g., the operation 415-YES), in operation 420, the electronic device 10 may perform the task. For example, the electronic device 10 may perform the task by executing a plan for performing the task.

If the task is not performable (e.g., the operation 415-NO), in operation 425, the electronic device 10 may transmit capability inquiries to the nearby electronic devices 200. For example, the electronic device 10 may transmit the capability inquiries based on short-range communication using the communication circuitry 190. The capability inquiries may be referred to as, for example, a discovery or a scan to discover the nearby electronic devices 200 associated with the same account as the electronic device 10. In one example, the capability inquiries and the discovery of the nearby electronic devices 200 may be performed as one procedure. In FIG. 4, the capability inquiries (the operation 425) are shown as being performed subsequent to the operation 415, but embodiments of the disclosure are not limited thereto. For example, the capability inquiries may be performed prior to the operation 415 or may be performed in parallel with the operation 415. For example, the capability inquiries (e.g., the operation 425) and the reception of the capability information (e.g., the operation 435) may be performed independently from the operation 415.

In an example, the electronic device 10 may search for the nearby electronic devices 200 adjacent to the electronic device 10 through scanning or discovery, and may perform the capability inquiries (e.g., the operation 425) on the searched peripheral electronic device 200. The electronic device 10 may broadcast (e.g., advertise) a signal including information of the electronic device 10, and may receive a response signal for the signal. The electronic device 10 may search for the nearby electronic devices 200 belonging to the same account by comparing the information of the responding device included in the response signal with the information of the electronic device of the same account (e.g., information in the account database 321 of FIG. 3).

For example, when a communication function for the capability inquiry of the electronic device 10 is deactivated, the electronic device 10 may display a graphical object indicating that the communication function is in a deactivated state. For the capability inquiry, the electronic device 10 may activate the communication function and perform the capability inquiry.

In an example, the capability inquiry may include information associated with the task and/or a pairing inquiry of the wireless audio device 15. The information associated with the task may include at least one of the audio data, information of the task corresponding to the audio data (e.g., an intent corresponding to the task), an application required for the task, or a service required for the task. The pairing inquiry may include, for example, identification information (e.g., a unique identifier and/or an address (e.g., a Bluetooth address or a medium access control (MAC) address)) of the wireless audio device 15.

At operation 430, each of the nearby electronic devices 200 may determine capability in response to the capability inquiries. For example, each of the nearby electronic devices 200 may determine capability for the task using information associated with the task included in the capability inquiry. Each of the nearby electronic devices 200 may identify capability for the task in accordance with the examples described above with respect to the capability management module 340 of FIG. 3. For example, each of the nearby electronic devices 200 may identify capability based on the pairing inquiry regarding the wireless audio device 15 included in the capability inquiry. If there is no pairing history with the wireless audio device 15, a nearby electronic device may identify capability as negative. If capability for the task is identified as positive and there is a pairing history with the wireless audio device 210, the nearby electronic device may identify its capability as positive.

In operation 435, the nearby electronic devices 200 may transmit capability information to the electronic device 10. In operation 440, the electronic device 10 may determine whether there is any capable device exists using the received capability information. In case receiving capability information indicating positive capability for the task from at least one of the peripheral electronic devices 200, the electronic device 10 may determining that the capable device exists. In case receiving capability information indicating negative capability for the task from all of the nearby electronic devices 200, the electronic device 10 may determine that the capable device does not exist.

When there is no capable device (e.g., the operation 440-NO), in operation 445, the electronic device 10 may provide a notification to the wireless audio device 15. For example, the notification may include information indicating that the task corresponding to the audio data cannot be executed. The wireless audio device 15 may audibly output the notification.

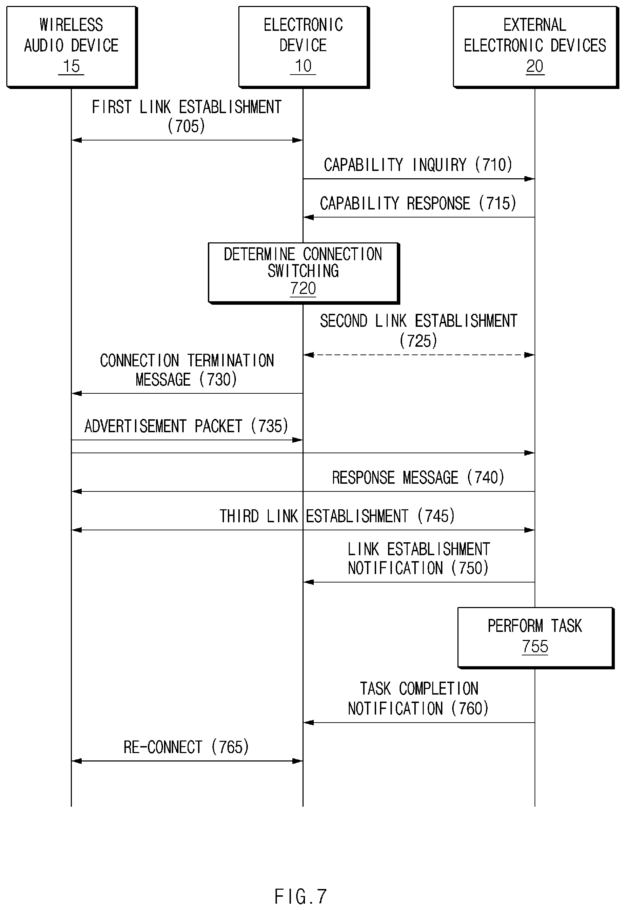

When the capable device exists (e.g., the operation 440-YES), in operation 450, the electronic device 10 may control a connection between the capable device and the wireless audio device 15. For example, the electronic device 10 may control the wireless audio device 15 such that the capable device and the wireless audio device 15 are wirelessly connected. After the connection with the wireless audio device 15, the capable device may perform the task corresponding to the audio data. The operation 450 may be described below with reference to FIGS. 7, 8, and 9.

In the example of FIG. 4, it has been described that the electronic device 10 performs the capability inquiry, but the capability inquiry (e.g., the operation 425) and the reception of the capability information (e.g., the operation 435) may be omitted. For example, the electronic device 10 may determine whether a capable device exists (e.g., operation 440) by using capability information of the nearby electronic devices 200 stored in the memory 130. The electronic device 10 may periodically or aperiodically search for nearby electronic devices 200. In addition, the electronic device 10 may store information of the nearby electronic devices 200 (e.g., data network connectivity, on-device processing capability, whether a voice agent is activated, a capsule capable to process, a service capable to process, a domain capable to process, application information, and/or a pairing history with the wireless audio device 15) for determining capability of the nearby electronic devices 200. For example, the electronic device 10 may store information of the nearby electronic devices 200 in the memory 130 using a device management module (e.g., the device management module 320 of FIG. 3). When information of the nearby electronic devices 200 pre-stored in the memory 130 exists, the electronic device 10 may perform the operation 440 using the information of the nearby electronic devices 200 stored in the memory 130. In this case, the operations 425, 430, and 435 may be omitted.

In an example, when there is a capable device (e.g., the operation 440-YES), the electronic device 10 may perform the operation 445 without additional input of the user (e.g., automatically). In an example, the electronic device 10 may provide information about the capable device to the user (e.g., through a display) and may perform the operation 450 based on the input of the user.

In an example, when there are a plurality of capable devices (e.g., operation 440-YES), the electronic device 10 may select one of the plurality of capable devices based on priorities. The electronic device 10 may select a capable device with the highest priority. The electronic device 10 may perform the operation 450 on the selected capable device. The selection of the capable device based on the priority, for example, may be performed (e.g., automatically) without additional inputs of the user.

In an example, when there are a plurality of capable devices (e.g., the operation 440-YES), the electronic device 10 may sort the plurality of capable devices based on the priorities. The electronic device 10 may provide a list of the sorted plurality of capable devices to the user (e.g., via a display). Based on a user input of selecting one capable device from the list, the electronic device 10 may perform the operation 450 with the selected capable device.

In an example, the priority of the plurality of capable devices may be set based on response signals (e.g., signals including capability information) or capability information. For example, a capable device having on-device processing capability may have a higher priority than a capable device without the on-device processing capability. For example, a capable device having a higher reception strength of a response signal may have a higher priority than a capable device having a lower reception strength. For example, a capable device whose response signal is received earlier may have a higher priority than a capable device whose response signal is received later. For example, a capable device located closest to the electronic device 10 may have the highest priority. In an example, the priority of the multiple capable devices may be set based on reception strength of connection with the wireless audio apparatus 15. For example, a capable device whose reception strength of connection with the wireless audio device 15 (e.g., reception strength of a received signal received by the wireless audio apparatus 15) is strong may have a relatively high priority.

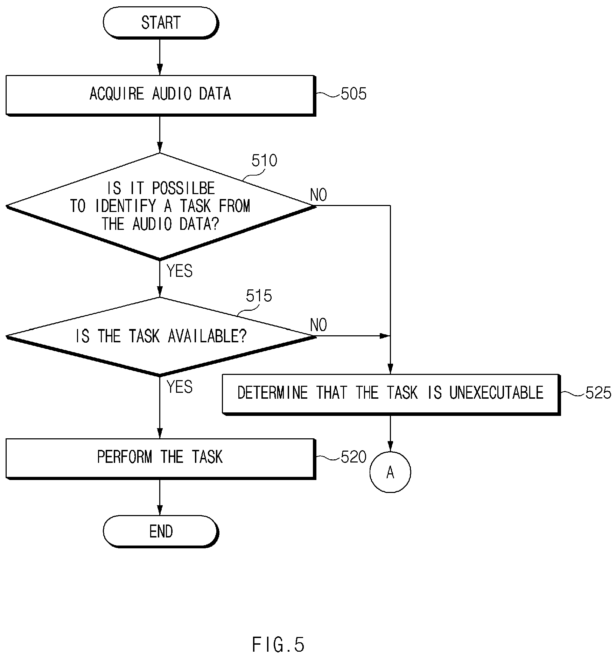

FIG. 5 is a flowchart of a method for determining task capability according to an example embodiment.

Referring to FIGS. 2 and 5, according to an embodiment, the electronic device 10 may determine task capability.

In the following exemplary embodiment, the operations may be performed sequentially, but not necessarily sequentially. For example, the order of the operations may be changed, and at least two operations may be performed in parallel.

In operation 505, the electronic device 10 may obtain audio data from the wireless audio device 15. For example, the electronic device 10 may obtain the audio data according to the operation 410 of FIG. 4.

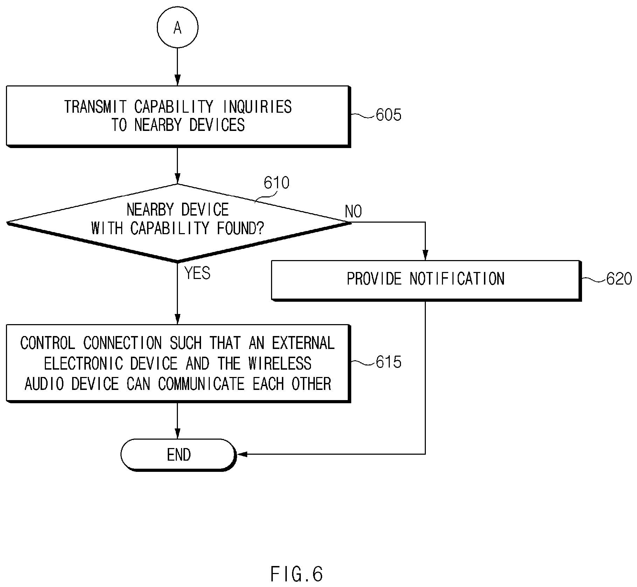

In operation 510, the electronic device 10 may determine whether the task is identifiable from the audio data. For example, when the voice agent module is deactivated, the electronic device 10 may not be able to identify the task. In this case (e.g., the operation 510-NO), in operation 525, the electronic device 10 may determine that the task is not executable. For example, the operation 525 may correspond to NO in the operation 415 of FIG. 4. When the operation 525 is performed, the electronic device 10 may perform operations according to reference point A of FIG. 6.

When the task is identified (e.g., the operation 510-YES), in operation 515, the electronic device 10 may determine the capability of the identified task. The electronic device 10 may determine the capability of the task based on the processability or the performability of the identified task. For example, the electronic device 10 may determine the capability according to operations of the capability management module 340 of FIG. 3. When the task is not capable (e.g., the operation 525-NO), the electronic device 10 may determine that the task is not executable in the operation 525.

When the task is capable (e.g., the operation 515-YES), in operation 520, the electronic device 10 may perform the task. For example, the electronic device 10 may perform the operation 520 according to the operation 420 of FIG. 4.

FIG. 6 is a flowchart of a connection control method based on capability according to an embodiment.

In the following exemplary embodiment, the operations may be performed sequentially, but not necessarily sequentially. For example, the order of the operations may be changed, and at least two operations may be performed in parallel.

Referring to FIGS. 2 and 6, when it is determined that the task cannot be executed (e.g., the operation 525 of FIG. 5), in operation 605, the electronic device 10 may transmit capability inquiries to nearby devices. For example, the electronic device 10 may transmit the capability inquiries according to the operation 425 of FIG. 4.

In operation 610, the electronic device 10 may determine whether a nearby device having capability is found. For example, the electronic device 10 may discover the nearby device when a response including positive capability information (e.g., a response to the capability inquiry) is received. When the response including positive capability information is not received (e.g., the operation 610-NO), in operation 620, the electronic device 10 may provide a notification. For example, the electronic device 10 may provide, through the wireless audio device 15, a notification indicating that the task cannot be performed.

When a nearby device with capability is discovered (e.g., the operation 610-YES), in operation 615, the electronic device 10 may control a connection such that the external electronic device 20 and the wireless audio device 15 can communicate with each other. For example, the external electronic device 20 may be referred to as a nearby device with capability. The operation 615 may correspond to the operation 450 of FIG. 4.

FIG. 7 is a signal flowchart of a method for performing a task according to an example embodiment.

In the following exemplary embodiment, the operations may be performed sequentially, but not necessarily sequentially. For example, the order of the operations may be changed, and at least two operations may be performed in parallel.

Referring to FIG. 7, in operation 705, the electronic device 10 and the wireless audio device 15 may establish a first link. For example, the electronic device 10 may establish the first link according to the operation 405 of FIG. 4. In an example, the electronic device 10 may be connected to the wireless audio device 15 based on a data profile (e.g., a serial port profile (SPP)) and an audio profile (e.g., a hands free profile (HFP) and/or an advanced audio distribution profile (A2DP)).

In operation 710, the electronic device 10 may transmit a capability inquiry to the external electronic device 20. For example, the electronic device 10 may perform the operation 710 based on the capability of the task, being identified from the audio data obtained by the wireless audio device 15, being identified as negative (e.g., the operation 415-NO). For example, the electronic device 10 may transmit the capability inquiry according to the operation 425 of FIG. 4. In an example, the electronic device 10 may transmit specified information in the capability inquiry. The electronic device 10 may transmit the capability inquiry by transmitting an advertising packet or an inquiry packet. For example, the specified information may include account information of the electronic device 10, identification information of the wireless audio device 15, and/or application information required for performing the task.

In operation 715, the electronic device 10 may receive a capability response from the external electronic device 20. The capability response may include the capability information of the operation 435 of FIG. 4. The external electronic device 20 may transmit the capability response in response to the capability inquiry. The capability response may include, for example, information indicating the capability of the external electronic device 20 for the task. In one example, the capability response may include identification information (e.g., an address and/or an identifier) of the external electronic device 20.

In operation 720, the electronic device 10 may determine connection switching. The electronic device 10 may determine the connection switching based on the capability information included in the capability response being identified as positive.

In operation 725, the electronic device 10 may establish a second link with the external electronic device 20. For example, the electronic device 10 may establish the second link with the external electronic device 20 based on short-range wireless communication. The establishment of the second link may be performed at any point in time. In an example, the establishment of the second link may be omitted.

In operation 730, based on the connection switching determination, the electronic device 10 may transmit a connection termination message to the wireless audio device 15. The electronic device 10 may transmit the connection termination message through the first link.

In operation 735, the wireless audio device 15 may transmit an advertising packet. The wireless audio device 15 may transmit an advertisement packet for discovering nearby devices in response to receiving the connection termination message. In an example, the wireless audio device 15 may transmit an inquiry packet for discovering nearby devices. The electronic device 10 may not respond to the advertising packet or the inquiry packet even if the advertising packet or the inquiry packets is received from the wireless audio device 15.

In operation 740, the external electronic device 20 may transmit a response message for the advertisement packet to the wireless audio device 15.

In operation 745, the wireless audio device 15 and the external electronic device 20 may establish a third link. Based on reception of the response message, the wireless audio device 15 may establish the third link with the external electronic device 20. The wireless audio device 15 and the external electrical device 20 may be connected based on the audio profile.

The operations 730, 735, 740, and 745 may correspond to the operation 450 of FIG. 4.

In operation 750, the external electronic device 20 may transmit a link establishment notification to the electronic device 10. For example, the external electronic device 20 may transmit information notifying the electronic device 10 of the establishment of the third link through the second link.

In operation 755, the external electronic device 20 may perform the task. For example, the external electronic device 20 may use information included in the capability inquiry to perform the task. The external electronic device 20 may provide, through the wireless audio device 15, an audio notification according as performing the task.

In operation 760, the external electronic device 20 may transmit a task completion notification to the electronic device 10. For example, when the task is completed, the external electronic device 20 may transmit the task completion notification to the electronic device through the second link.

In operation 765, the electronic device 10 may re-connect with the wireless audio device 15. The electronic device 10 may re-connect, based on reception of the task completion notification, with the wireless audio device 15. In an example, the external electronic device 20 may transmit a message for releasing the third link to the wireless audio device 15 when the task is completed.

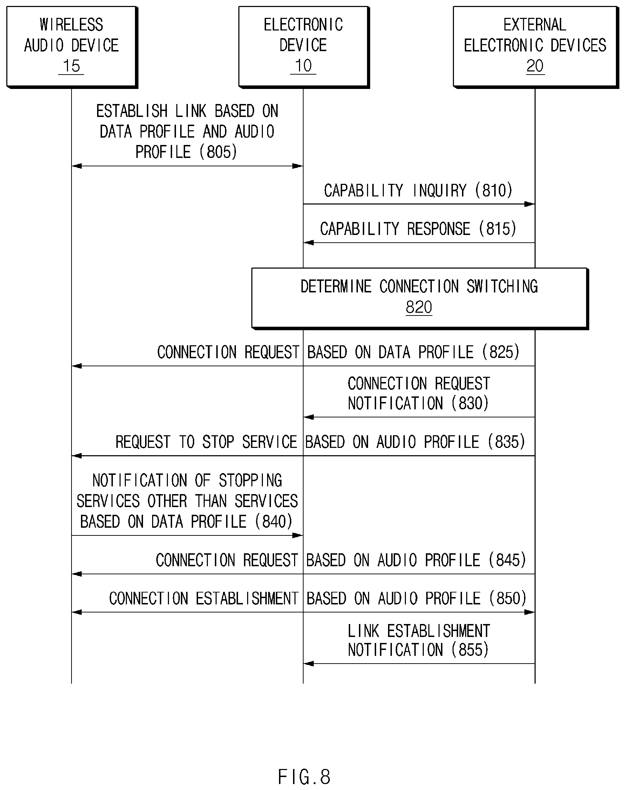

FIG. 8 is a signal flowchart of a connection control method according to an example embodiment.

In the following exemplary embodiment, the operations may be performed sequentially, but not necessarily sequentially. For example, the order of the operations may be changed, and at least two operations may be performed in parallel.

Referring to FIG. 8, in operation 805, the electronic device 10 and the wireless audio device 15 may establish a link based on a data profile (e.g., a serial port profile (SPP)) and an audio profile (e.g., a hands free profile (HFP) and/or an advanced audio distribution profile (A2DP)). For example, the electronic device 10 may establish a first link according to the operation 405 of FIG. 4.

In operation 810, the electronic device 10 may transmit a capability inquiry to the external electronic device 20. For example, the electronic device 10 may perform the operation 810 based on the capability for the task, being identified from the audio data obtained by the wireless audio device 15, being identified as negative (e.g., the operation 415-NO). For example, the electronic device 10 may transmit the capability inquiry according to the operation 710 of FIG. 7.

In operation 815, the electronic device 10 may receive a capability response from the external electronic device 20. The capability response may include the capability information of the operation 435 of FIG. 4. For example, the electronic device 10 may receive the capability response according to the operation 715 of FIG. 7.

In operation 820, the electronic device 10 and the external electronic device 20 may determine the connection switching. For example, the electronic device 10 may determine the connection switching based on the capability information included in the capability response being identified as positive.

In operation 825, the external electronic device 20 may request a connection based on the data profile to the wireless audio device 15 in response to the determination of the connection switching. In response to the connection request based on the data profiled, a data profile-based connection between the external electronic device 20 and the wireless audio device 15 may be established.

In operation 830, the external electronic device 20 may transmit a connection request notification to the electronic device 10. The connection request notification may include information indicating that the external electronic device 20 has transmitted the connection request to the wireless audio device 15.

**In** operation 835, the external electronic device 20 may request the wireless audio device 10 to stop services based on the audio. **In** operation 840, the wireless audio device 10 may transmit a notification of stopping services other than services based on the data profile to the electronic device 10 based on receiving request to stop services based on the audio profile. **In** this case, the connection based on the data profile between the electronic device 10 and the wireless audio device 15 may be maintained. **In** this case, the connection based on the audio profile between the electronic device 10 and wireless audio device 15 may be released.

**In** operation 845, the external electronic device 20 may transmit a connection request based on an audio profile to the wireless audio device 15. **In** response to connection request based on the audio profile, an audio profile-based connection may be established between the wireless audio device 15 and the external electronic device 20 in operation 850.

**In** operation 855, the external electronic device 20 may transmit a link establishment notification to the electronic device 10. For example, the external electronic device 20 may transmit the link establishment notification based on the audio profile-based connection establishment between the wireless audio device 15 and the external electronic device 20. After transmitting the link establishment notification, the external electronic device 20 may perform the task (e.g., the operation 755 of FIG. 7).

The operations 825, 830, 835, 840, 845, 850, and 855 may correspond to the operation 450 of FIG. 4.

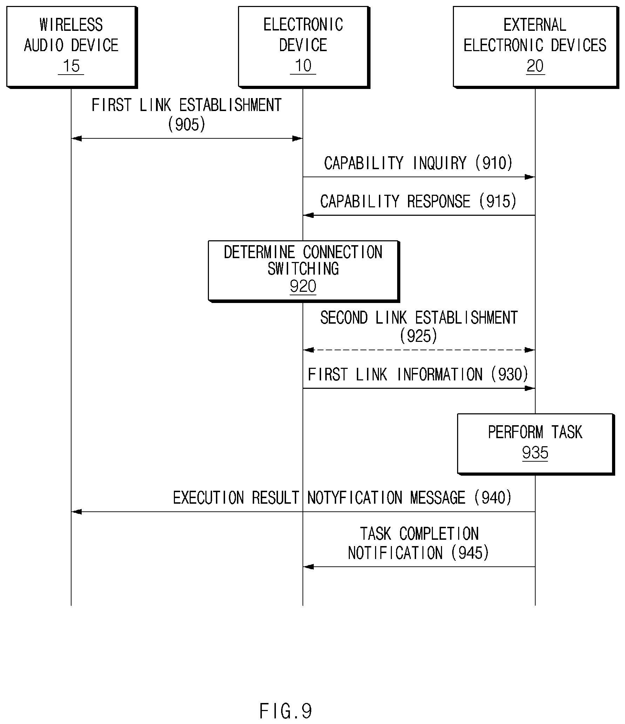

FIG. 9 is a signal flowchart of a method for performing a task according to an embodiment.

In the following exemplary embodiment, the operations may be performed sequentially, but not necessarily sequentially. For example, the order of the operations may be changed, and at least two operations may be performed in parallel.

Referring to FIG. 9, in operation 905, the electronic device 10 and the wireless audio device 15 may establish a first link. For example, the electronic device 10 may establish the first link according to the operation 705 of FIG. 7.

In operation 910, the electronic device 10 may transmit a capability inquiry to the external electronic device 20. For example, the electronic device 10 may transmit the capability inquiry according to the operation 710 of FIG. 7.

In operation 915, the electronic device 10 may receive a capability response from the external electronic device 20. The electronic device 10 may receive the capability response according to the operation 715 of FIG. 7.

In operation 920, the electronic device 10 may determine connection switching. The electronic device 10 may determine the connection switching based on the capability information included in the capability response being identified as positive.

In operation 925, the electronic device 10 may establish a second link with the external electronic device 20. For example, the electronic device 10 may establish the second link with the external electronic device 20 based on short-range wireless communication. The establishment of the second link may be performed at any point in time. In an example, the establishment of the second link may be omitted.

In operation 930, based on the connection switching determination, the electronic device 10 may transmit first link information to the external electronic device 30. The first link information may include information for estimating radio resources of the first link. For example, the first link information may include address information (e.g., a Bluetooth address of a master device of the first link, a Bluetooth address of the electronic device 10, and/or a Bluetooth address of the wireless audio device 15), piconet clock information (e.g., clock native (CLKN) of the master device of the first link), logical transport (LT) address information (e.g., information allocated by the master device of the first link), used channel map information, link key information, service discovery protocol (SDP) information (e.g., service and/or profile information associated with the first link), and/or supported feature information. After transmission of the first link information, the electronic device 10 may not perform communication via the first link.

The external electronic device 20 may monitor the first link by using the first link information. The external electronic device 20 may communicate with the wireless audio device 15 by using radio resources of the first link.

In operation 935, the external electronic device 20 may perform the task. For example, the external electronic device 20 may use information included in the capability inquiry to perform the task.

In operation 940, the external electronic device 20 may transmit, to the wireless audio device 15 through the first link, an execution result notification message as the task being performed.

In operation 945, the external electronic device 20 may transmit a task completion notification to the electronic device 10. For example, the external electronic device 20 may transmit the task completion notification to the electronic device 10 through the second link when the task is completed. After the task is completed, the second link may be released. When the task completion notification is received, the electronic device 10 may communicate with the wireless audio device 15 through the first link. In the example of FIG. 9, the electronic device 10 may transfer authority over the first link to the external electronic device 20 while the task is being performed.

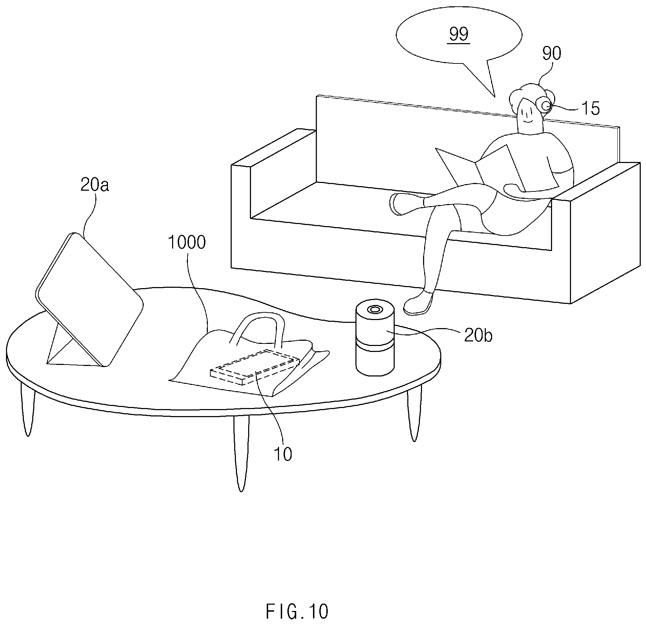

FIG. 10 illustrates an environment for performing a task according to an example.

Referring to FIGS. 2 and 10, it may be assumed that the wireless audio device 15 is connected to the electronic device 10. In an example, a user 90 may utter a voice command 99. The wireless audio device 15 may transmit audio data including the voice command to the electronic device 10.

In an example, the voice command 99 may indicate a task corresponding to sending texts. For example, the electronic device 10 (e.g., a mobile phone) may be in a state in which text transmission cannot be performed or a state that is difficult to be accessed by the user 90. The electronic device 10 may be in a state of being unable to connect to a data network for text transmission. The electronic device 10 may be in a state (e.g., a state in a dark environment) in which the electronic device 10 is located at less than a specified illuminance based on the illuminance sensor, and in a state in which the display is turned off. In this case, the electronic device 10 may identify the first external electronic device 20a (e.g., a tablet PC) capable of performing the text transmission. The electronic device 10 may output, through the wireless audio device 15, voice feedback recommending switching the connection to the first external electronic device 20a. For example, the electronic device 10 may provide voice feedback such as "Do you want to connect to the tablet and execute the command?" through the wireless audio device 15. When a positive response to the recommendation is received using the wireless audio device 15, the electronic device 10 may control the connection such that the wireless audio device 15 is connected to the first external electronic device 20a. In an example, the electronic device 10 may output, through the wireless audio device 15, voice feedback indicating that the connection is switched to the first external electronic device 20a and the task is being executed. The electronic device 10 may provide voice feedback such as "cannot be executed on the mobile phone, connect to the tablet and execute the command" through the wireless audio device 15. In an example, the voice feedback recommending switching the connection to the first external electronic device 20a may be omitted.

In an example, the voice command 99 may indicate a task corresponding to control of an internet of things (IoT) device. For example, the electronic device 10 may be in a state (e.g., a state in a dark environment) in which the electronic device 10 is located at less than a specified illuminance based on the illuminance sensor, and the electronic device 10 may be in the state in which the display is turned off. For example, the electronic device 10 may not include an application for controlling the IoT device. In this case, the electronic device 10 may identify the second external electronic device 20b on which the application of the IoT device is installed. The electronic device 10 may output, through the wireless audio device 15, voice feedback recommending switching of connection to the second external electronic device 20b. For example, the electronic device 10 may provide voice feedback such as "Do you want to connect to the tablet and execute the command?" through the wireless audio device 15. When a positive response to the recommendation is received using the wireless audio device 15, the electronic device 10 may control the connection such that the wireless audio device 15 is connected to the second external electronic device 20b. In an example, the electronic device 10 may output, through the wireless audio device 15, voice feedback indicating that the connection is switched to the first external electronic device 20a and the task is being executed. The electronic device 10 may provide voice feedback such as "cannot be executed on the mobile phone, connect to the tablet and execute the command" through the wireless audio device 15. In an example, the voice feedback recommending switching the connection to the first external electronic device 20a may be omitted.

In one example, the voice command 99 may indicate the invocation of a voice agent. For example, the electronic device 10 may be in a state in which the voice agent is deactivated. For example, the electronic device 10 may be in a state in which it is not possible to connect to a server (e.g., the server device 30 of FIG. 1) interworking with the voice agent. In this case, the electronic device 10 may identify the first external electronic device 20a and the second external electronic device 20b in which the voice agent is activated. The electronic device 10 may output, through the wireless audio device 15, voice feedback that recommends switching the connection to the first external electronic device 20a or the second external electronic device 20b. For example, the electronic device 10 may provide voice feedback such as "Do you want to connect to the tablet and execute a command?" through the wireless audio device 15. The electronic device 10 may acquire a response for selecting one of the first external electronic device 20a and the second external electronic device 20b by using the wireless audio device 15. The electronic device 10 may control the connection such that the wireless audio device 15 is connected to the selected external electronic device. In an example, the electronic device 10 may output, through the wireless audio device 15, voice feedback indicating that the connection is switched to the first external electronic device 20a and the task is being executed. The electronic device 10 may provide voice feedback such as "cannot be executed on the mobile phone, connect to the tablet and execute the command" through the wireless audio device 15. In an example, the voice feedback recommending switching the connection to the first external electronic device 20a may be omitted.

In an example, the voice command 99 may indicate a task corresponding to playback of multimedia. For example, the electronic device 10 may be in a state in which it is not possible to play the multimedia. For example, the electronic device 10 may not store the multimedia indicated by the voice command 99. For example, the electronic device 10 may be located in the bag 1000. The electronic device 10 may detect a blockage state of the electronic device 10 using the sensor circuitry 170 and may determine that the multimedia playback cannot be performed based on the blockage state of the electronic device. In this case, the electronic device 10 may identify the first external electronic device 20a capable of performing the multimedia playback. The electronic device 10 may output, through the wireless audio device 15, voice feedback recommending switching the connection to the first external electronic device 20a. For example, the electronic device 10 may provide voice feedback such as "Do you want to connect to the tablet and execute the command?" through the wireless audio device 15. When a positive response to the recommendation is received using the wireless audio device 15, the electronic device 10 may control the connection such that the wireless audio device 15 is connected to the first external electronic device 20a. In an example, the electronic device 10 may output, through the wireless audio device 15, voice feedback indicating that the connection is switched to the first external electronic device 20a and the task is being executed. The electronic device 10 may provide voice feedback such as "cannot be executed on the mobile phone, connect to the tablet and execute the command" through the wireless audio device 15. In an example, the voice feedback recommending switching the connection to the first external electronic device 20a may be omitted.

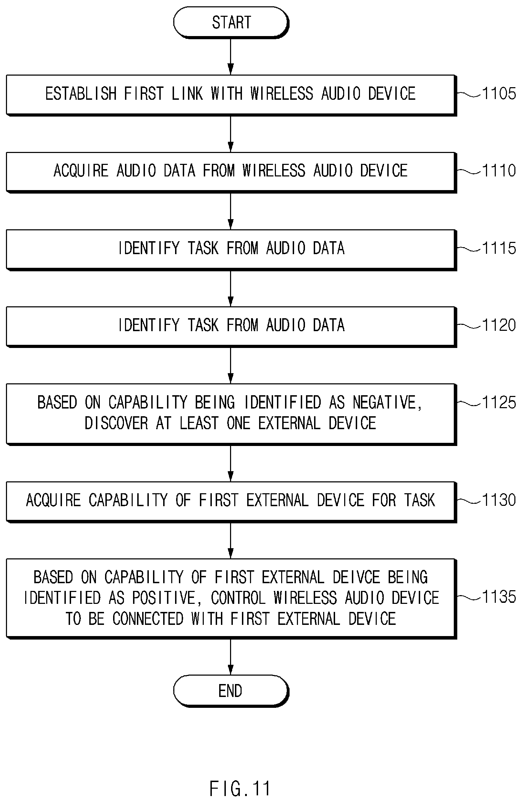

FIG. 11 is a flowchart of a capability-based connection control method according to an example embodiment.

In the following exemplary embodiment, the operations may be performed sequentially, but not necessarily sequentially. For example, the order of the operations may be changed, and at least two operations may be performed in parallel.

Referring to FIG. 11, according to an embodiment, an electronic device (e.g., the electronic device 10 of FIG. 2, the electronic device 300 of FIG. 3, or the electronic device 1201 of FIG. 12) may include at least one wireless communication circuitry (e.g., the wireless communication circuitry 190 of FIG. 2 or the communication module 1290 of FIG. 12), at least one processor (e.g., the processor 120 of FIG. 2 or the processor 1220 of FIG. 12), and memory (e.g., the memory 130 of FIG. 2 or the memory 1230 of FIG. 12). For example, the at least one processor may be electrically connected to the at least one wireless communication circuitry and the memory. The memory may store instructions that, when executed by the at least one processor, cause the at least one processor to perform operations described below.

In operation 1105, the electronic device may establish a first link with a wireless audio device (e.g., the wireless audio device 15 of FIG. 2). For example, the electronic device may establish the first link according to the description described above with respect to the operation 405 of FIG. 4, the operation 705 of FIG. 7, the operation 805 of FIG. 8, or the operation 905 of FIG. 9.

In operation 1110, the electronic device may obtain audio data from the wireless audio device. For example, the audio data may include a voice command. For example, the electronic device may obtain the audio data according to the description described above with respect to the operation 410 of FIG. 4 or the operation 505 of FIG. 5.

In operation 1115, the electronic device may identify a task from the audio data. For example, the electronic device may obtain text data corresponding to the audio data by performing automatic voice recognition on the audio data. The electronic device may identify an intent of a user and/or a parameter (e.g., an entity and/or a slot) included in the text by performing natural language understanding on the text. The electronic device may identify the task based on the intent and/or the parameter. In an example, the electronic device may identify the task using the automatic voice recognition module 331 and the natural language understanding module 332 of FIG. 3.

In operation 1120, the electronic device may identify capability of the electronic device for the task. For example, the electronic device may identify the capability of the electronic device based on at least one of network connectivity of the electronic device, an application associated with the task, or context information of the electronic device. For example, the electronic device may further include at least one sensor circuitry (e.g., the sensor circuitry 170 of FIG. 2). The electronic device may obtain the context information of the electronic device by using the at least one sensor circuitry. When the context information indicates a blocked state of the electronic device, the electronic device may identify the capability of the electronic device as negative. For example, the electronic device may identify the capability according to the description described above in connection with the capability management module 340 of FIG. 3.

In operation 1125, the electronic device may discover at least one external device (e.g., the nearby electronic devices 200 of FIG. 4) based on identifying the availability as negative.

For example, the electronic device may discover the at least one external device by performing discovery based on short-range wireless communication. In an example, the electronic device may discover the at least one external device by transmitting capability inquiries (e.g., the operation 425 of FIG. 4) and receiving capability information (e.g., the operation 435 of FIG. 4). In an example, the electronic device may perform discovery to discover the at least one external electronic device independently from the capability inquiry.

In operation 1130, the electronic device may acquire capability of the first external device for the task. For example, the electronic device may receive capability information from the first external device among the at least one discovered external device. For example, the electronic device, may acquire the capability information according to the description described above with respect to the operation 435 of FIG. 4, the operation 715 of FIG. 7, the operation 815 of FIG. 8, or the operation 915 of FIG. 9.

In an example, the electronic device may receive capability information from a plurality of discovered external devices, and select the first external device based on the capability information. The electronic device may identify priorities of the plurality of external devices based on the capability information of the plurality of external devices. For example, the electronic device may identify the priorities according to the method described above in connection with FIG. 4. The electronic device may select, among the plurality of external devices, the first external device having the highest priority. In an example, the priority may be based on at least one of a distance to the electronic device of each of the plurality of external devices or blockage of each of the plurality of external devices.

In an example, the voice command of the audio data may indicate playback of media. The first external device may be a device that stores the media. The electronic device may select the first external device that stores the media from among the plurality of external devices.

In operation 1135, the electronic device may control the wireless audio device so that the wireless audio device is connected to the first external device based on identifying that the capability of the first external electronic device is positive.

For example, the electronic device may release the first link with the wireless audio device. After releasing the first link, the electronic device may receive, from the first external device, a signal indicating establishment of a second link between the first external device and the wireless audio device. For example, the electronic device may release the first link by transmitting, to the wireless audio device, a signal indicating release of the first link. By transmitting the signal indicating release of the first link, the electronic device can control the wireless audio device to perform a scan for connecting with the first external device.

For example, the electronic device may transmit information of the first link to the first external device to enable the wireless audio device to communicate with the first external device (or vice versa) using the first link.

For example, the electronic device may control the connection of the wireless audio device according to the description described above in connection with the operation 450 of FIG. 4. The electronic device may control the connection of the wireless device according to the description described above in relation to the operation 615 of FIG. 6. The electronic device may control the connection of a wireless audio device according to the description described above in connection with the operations 730, 735, 740, 745, and 750 of FIG. 7. The electronic device may control the connection of the wireless audio device according to the description described above in connection with the operations 825, 830, 835, 840, 845, 850, and 855 of FIG. 8. The electronic device may control the connection of wireless audio device according to the description described above in connection to the operations 930, 935, 940, and 945 of FIG. 9.

As described above with respect to FIGS. 4 to 9, when the task performed by the external electronic device is completed, the electronic device may be reconnected with the wireless audio device.

Fig. 12 is a block diagram illustrating an electronic device 1201 in a network environment 1200 according to various embodiments.

Referring to Fig. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module(SIM) 1296, or an antenna module 1297. In some embodiments, at least one of the components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to one embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thererto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to one embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth^{™}, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 1264dB or less) for implementing mMTC, or U-plane latency (e.g., 0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

FIG. 13 is a block diagram illustrating an integrated intelligence system according to an embodiment.

Referring to FIG. 13, an integrated intelligence system according to an embodiment may include a user terminal 1301 (e.g., the electronic device 1201 of FIG. 12), an intelligent server 1400 (e.g., the server 1208 of FIG. 12), and a service server 1500 (e.g., the server 1208 of FIG 12).

The user terminal 1301 (e.g., the electronic device 1201 of FIG. 12) according to an embodiment may be a terminal device (or an electronic device) capable of connecting to Internet, and may be, for example, a mobile phone, a smartphone, a personal digital assistant (PDA), a notebook computer, a television (TV), a household appliance, a wearable device, a head mounted display (HMD), or a smart speaker.

According to the illustrated embodiment, the user terminal 1301 may include a communication interface 1390, a microphone 1370, a speaker 1355, a display 1360, a memory 1330, and/or a processor 1320. The above-listed components may be operatively or electrically connected to each other.

The communication interface 1390 (e.g., the communication module 1290 of FIG. 12) may be connected to an external device to transmit and receive data. The microphone 1370 (e.g., the audio module 1270 of FIG. 12) receives a sound (e.g., a user utterance) and may convert the sound into an electrical signal. The speaker 1355 (e.g., the sound output module 1255 of FIG. 12) may output the electrical signal into a sound (e.g., a voice). The display 1360 (e.g., the display module 1260 of FIG. 12) is configured to display an image or a video. The display 1360 of an embodiment may also display a graphic user interface (GUI) of an executed app (or application program). The display 1360 of an example embodiment may receive a touch input through a touch sensor. For example, the display 1360 may receive a text input through the touch sensor of an image keyboard area displayed on the display 1360.

The memory 1330 (e.g., the memory 1230 of FIG. 12) of an embodiment may store a client module 1331, a software development kit (SDK) 1333, and a plurality of applications. The client module 1331 and the SDK 1333 may constitute a framework (or, a solution program) for performing general functions. In addition, the client module 1331 or the SDK 1333 may also constitute a framework for processing a user input (e.g., a voice input, a text input, or a touch input).

The plurality of applications (e.g., 1335a and 1335b) may be programs for performing specified functions. According to an embodiment, the plurality of applications may include a first application 1335a and/or a second application 1335b. According to an embodiment, each of the plurality of applications may include a plurality of actions for performing a specified function. For example, the applications may include an alarm application, a message application, and/or a schedule application. According to an embodiment, the plurality of applications may be executed by the processor 1320 to sequentially execute at least some of the plurality of actions.

The processor 1320 of an embodiment may control overall operations of the user terminal 1301. For example, the processor 1320 may be electrically connected to the communication interface 1390, the microphone 1370, the speaker 1355, and the display 1360 to perform a specified operation. For example, the processor 1310 may include at least one processor.

Moreover, the processor 1320 according to an embodiment may execute the program stored in the memory 1330 so as to perform a specified function. For example, according to an embodiment, the processor 1320 may execute at least one of the client module 1331 or the SDK 1333 so as to perform a following operation for processing a voice input. The processor 1320 may control operations of the plurality of applications 1335 via the SDK 1333. The following actions described as the actions of the client module 1331 or the SDK 1333 may be the actions performed by the execution of the processor 1320.

According to an embodiment, the client module 1331 may receive a voice input. For example, the client module 1331 may receive a voice signal corresponding to a user utterance detected through the microphone 1370. The client module 1331 may transmit the received voice input (e.g., a voice input) to the intelligence server 1100. The client module 1331 may transmit state information of the user terminal 1301 to the intelligence server 1400 together with the received voice input. For example, the state information may be execution state information of an application.

The client module 1331 according to an embodiment may receive a result corresponding to the received user input from the intelligent server 1400. For example, when the client module 1331 can calculate the result corresponding to the received user input in the intelligent server 1400, the client module 1331 may receive the result corresponding to the received user input. The client module 1331 may display the received result on the display 1360. In addition, the client module 1331 can output the received result as audio through the speaker 1355.

According to an embodiment, the client module 1331 may receive a plan corresponding to the received voice input. The client module 1331 may display, on the display 1360, a result of executing a plurality of actions of an app depending on the plan. For example, the client module 1331 may sequentially display the result of executing the plurality of actions on a display. For another example, the user terminal 1301 may display only a part of results (e.g., a result of the last action) of executing the plurality of actions, on the display and may output only the part of results through the speaker 1355.

According to an embodiment, the client module 1331 may receive a request for obtaining information necessary to calculate the result corresponding to a voice input, from the intelligence server 1400. According to an embodiment, the client module 1331 may transmit the necessary information to the intelligence server 1400 in response to the request.

According to an embodiment, the client module 1331 may transmit, to the intelligence server 1400, information about the result of executing a plurality of actions depending on the plan. The intelligence server 1400 may identify that the received voice input is correctly processed, using the result information.

According to an embodiment, the client module 1331 may include a speech recognition module. According to an embodiment, the client module 1331 may recognize a voice input for performing a limited function, via the speech recognition module. For example, the client module 1331 may launch an intelligence app for processing a specific voice input by performing an organic action, in response to a specified voice input (e.g., wake up!).

According to an embodiment, the intelligence server 1400 may receive information associated with a user's voice input from the user terminal 1301 over a communication network 1399. According to an embodiment, the intelligence server 1400 may convert data associated with the received voice input to text data. According to an embodiment, the intelligence server 1400 may generate at least one plan for performing a task corresponding to the user's voice input, based on the text data.

According to an embodiment, the plan may be generated by an artificial intelligent (AI) system. The AI system may be a rule-based system, or may be a neural network-based system (e.g., a feedforward neural network (FNN) and/or a recurrent neural network (RNN)). Alternatively, the AI system may be a combination of the above-described systems or an AI system different from the above-described system. According to an embodiment, the plan may be selected from a set of predefined plans or may be generated in real time in response to a user's request. For example, the AI system may select at least one plan of the plurality of predefined plans.

According to an embodiment, the intelligence server 1400 may transmit a result according to the generated plan to the user terminal 1301 or may transmit the generated plan to the user terminal 1301. According to an embodiment, the user terminal 1301 may display the result according to the plan, on a display. According to an embodiment, the user terminal 1301 may display a result of executing the action according to the plan, on the display.

The intelligence server 1400 according to an embodiment may include a front end 1410, a natural language platform 1420, a capsule database (capsule DB) 1430, an execution engine 1440, an end user interface 1450, a management platform 1460, a big data platform 1470, or an analytic platform 1480.

According to an embodiment, the front end 1410 may receive a voice input received from the user terminal 1301. The front end 1410 may transmit a response corresponding to the voice input to the user terminal 1301.

According to an embodiment, the natural language platform 1420 may include an automatic speech recognition (ASR) module 1421, a natural language understanding (NLU) module 1423, a planner module 1425, a natural language generator (NLG) module 1427, and/or a text to speech module (TTS) module 1429.

According to an embodiment, the ASR module 1421 may convert the voice input received from the user terminal 1301 into text data. According to an embodiment, the NLU module 1423 may grasp the intent of the user, using the text data of the voice input. For example, the NLU module 1423 may grasp the intent of the user by performing syntactic analysis or semantic analysis. According to an embodiment, the NLU module 1423 may grasp the meaning of words extracted from the voice input by using linguistic features (e.g., syntactic elements) such as morphemes or phrases and may determine the intent of the user by matching the grasped meaning of the words to the intent.

According to an embodiment, the planner module 1425 may generate the plan by using a parameter and the intent that is determined by the NLU module 1423. According to an embodiment, the planner module 1425 may determine a plurality of domains necessary to perform a task, based on the determined intent. The planner module 1425 may determine a plurality of actions included in each of the plurality of domains determined based on the intent. According to an embodiment, the planner module 1425 may determine the parameter necessary to perform the determined plurality of actions or a result value output by the execution of the plurality of actions. The parameter and the result value may be defined as a concept of a specified form (or class). As such, the plan may include the plurality of actions and/or a plurality of concepts, which are determined by the intent of the user. The planner module 1425 may determine the relationship between the plurality of actions and the plurality of concepts stepwise (or hierarchically). For example, the planner module 1425 may determine the execution sequence of the plurality of actions, which are determined based on the user's intent, based on the plurality of concepts. In other words, the planner module 1425 may determine an execution sequence of the plurality of actions, based on the parameters necessary to perform the plurality of actions and the result output by the execution of the plurality of actions. Accordingly, the planner module 1425 may generate a plan including information (e.g., ontology) about the relationship between the plurality of actions and the plurality of concepts. The planner module 1425 may generate the plan, using information stored in the capsule DB 1430 storing a set of relationships between concepts and actions.

According to an embodiment, the NLG module 1427 may change specified information into information in a text form. The information changed to the text form may be in the form of a natural language speech. The TTS module 1429 according to an embodiment may change information in the text form to information in a voice form.

According to an embodiment, all or part of the functions of the natural language platform 1420 may be also implemented in the user terminal 1301.

The capsule DB 1430 may store information about the relationship between the actions and the plurality of concepts corresponding to a plurality of domains. According to an embodiment, the capsule may include a plurality of action objects (or action information) and concept objects (or concept information) included in the plan. According to an embodiment, the capsule DB 1430 may store the plurality of capsules in a form of a concept action network (CAN). According to an embodiment, the plurality of capsules may be stored in the function registry included in the capsule DB 1430.

The capsule DB 1430 may include a strategy registry that stores strategy information necessary to determine a plan corresponding to a voice input. When there are a plurality of plans corresponding to the voice input, the strategy information may include reference information for determining one plan. According to an embodiment, the capsule DB 1430 may include a follow-up registry that stores information of the follow-up action for suggesting a follow-up action to the user in a specified context. For example, the follow-up action may include a follow-up utterance. According to an embodiment, the capsule DB 1430 may include a layout registry storing layout information of information output via the user terminal 1301. According to an embodiment, the capsule DB 1430 may include a vocabulary registry storing vocabulary information included in capsule information. According to an embodiment, the capsule DB 1430 may include a dialog registry storing information about dialog (or interaction) with the user. The capsule DB 1430 may update an object stored via a developer tool. For example, the developer tool may include a function editor for updating an action object or a concept object. The developer tool may include a vocabulary editor for updating a vocabulary. The developer tool may include a strategy editor that generates and registers a strategy for determining the plan. The developer tool may include a dialog editor that creates a dialog with the user. The developer tool may include a follow-up editor capable of activating a follow-up target and editing the follow-up utterance for providing a hint. The follow-up target may be determined based on a target, the user's preference, or an environment condition, which is currently set. The capsule DB 1430 according to an embodiment may be also implemented in the user terminal 1301.

According to an embodiment, the execution engine 1440 may calculate a result by using the generated plan. The end user interface 1450 may transmit the calculated result to the user terminal 1301. Accordingly, the user terminal 1301 may receive the result and may provide the user with the received result. According to an embodiment, the management platform 1460 may manage information used by the intelligence server 1400. According to an embodiment, the big data platform 1470 may collect data of the user. According to an embodiment, the analytic platform 1480 may manage quality of service (QoS) of the intelligence server 1400. For example, the analytic platform 1480 may manage the component and processing speed (or efficiency) of the intelligence server 1400.

According to an embodiment, the service server 1500 may provide the user terminal 1301 with a specified service (e.g., ordering food or booking a hotel). According to an embodiment, the service server 1500 may be a server operated by the third party. According to an embodiment, the service server 1500 may provide the intelligence server 1400 with information for generating a plan corresponding to the received voice input. The provided information may be stored in the capsule DB 1430. Furthermore, the service server 1500 may provide the intelligence server 1400 with result information according to the plan.

In the above-described integrated intelligence system, the user terminal 1301 may provide the user with various intelligent services in response to a user input. The user input may include, for example, an input through a physical button, a touch input, or a voice input.

According to an embodiment, the user terminal 1301 may provide a speech recognition service via an intelligence app (or a speech recognition app) stored therein. In this case, for example, the user terminal 1301 may recognize a user utterance or a voice input, which is received via the microphone, and may provide the user with a service corresponding to the recognized voice input.

According to an embodiment, the user terminal 1301 may perform a specified action, based on the received voice input, independently, or together with the intelligence server 1400 and/or the service server 1500. For example, the user terminal 1301 may launch an app corresponding to the received voice input and may perform the specified action via the executed app.

According to an embodiment, when providing a service together with the intelligence server 1400 and/or the service server 1500, the user terminal 1301 may detect a user utterance by using the microphone 1370 and may generate a signal (or voice data) corresponding to the detected user utterance. The user terminal may transmit the voice data to the intelligence server 1400 by using the communication interface 1390.

According to an embodiment, the intelligence server 1400 may generate a plan for performing a task corresponding to the voice input or the result of performing an action depending on the plan, as a response to the voice input received from the user terminal 1301. For example, the plan may include a plurality of actions for performing the task corresponding to the voice input of the user and/or a plurality of concepts associated with the plurality of actions. The concept may define a parameter to be input upon executing the plurality of actions or a result value output by the execution of the plurality of actions. The plan may include relationship information between the plurality of actions and/or the plurality of concepts.

According to an embodiment, the user terminal 1301 may receive the response by using the communication interface 1390. The user terminal 1301 may output the voice signal generated in the user terminal 1301 to the outside by using the speaker 1355 or may output an image generated in the user terminal 1301 to the outside by using the display 1360.

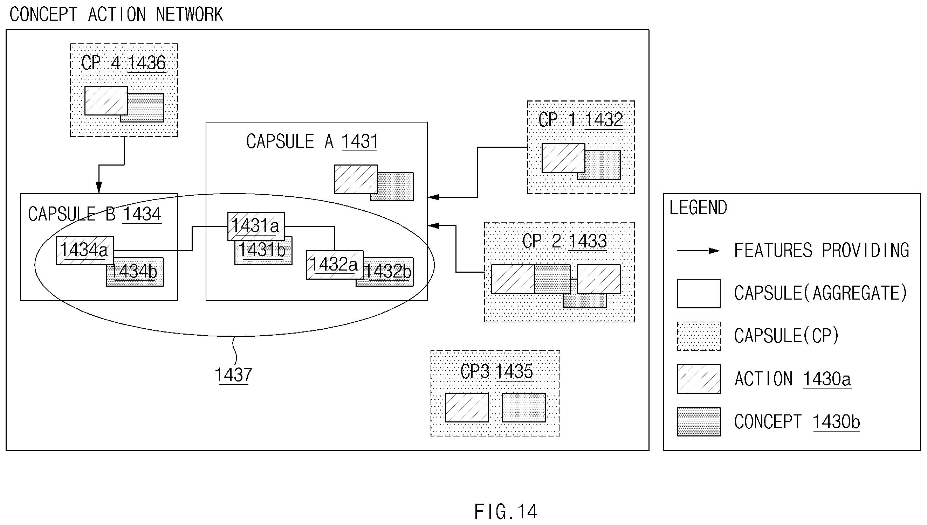

FIG. 14 is a diagram illustrating a form in which relationship information between concepts and actions is stored in a database according to an embodiment.

A capsule database (e.g., the capsule DB 1430 in FIG. 13) of the intelligence server 1400 (e.g., the intelligence server 1400 in FIG. 13) may store a capsule in the form of a CAN (concept action network). The capsule DB may store an action for processing a task corresponding to a user's voice input and a parameter necessary for the action, in the CAN form.

The capsule DB may store a plurality capsules (e.g., a capsule A 1431 and a capsule B 1434) respectively corresponding to a plurality of domains (e.g., applications). According to an embodiment, a single capsule (e.g., the capsule A 1431) may correspond to a single domain (e.g., a location (geo) or an application). Furthermore, at least one service provider (e.g., CP 1 1432 or CP 10 1433) for performing a function for a domain associated with the capsule may correspond to one capsule. According to an embodiment, the single capsule may include at least one or more actions 1430a and at least one or more concepts 1430b for performing a specified function.

The natural language platform 1420 may generate a plan for performing a task corresponding to the received voice input, using the capsule stored in a capsule database. For example, the planner module 1325 of the natural language platform may generate the plan by using the capsule stored in the capsule database. For example, a plan 1437 may be generated by using actions 1431a and 1432a and concepts 1431b and 1432b of the capsule A 1430a and an action 1434a and a concept 1434b of the capsule B 1434.

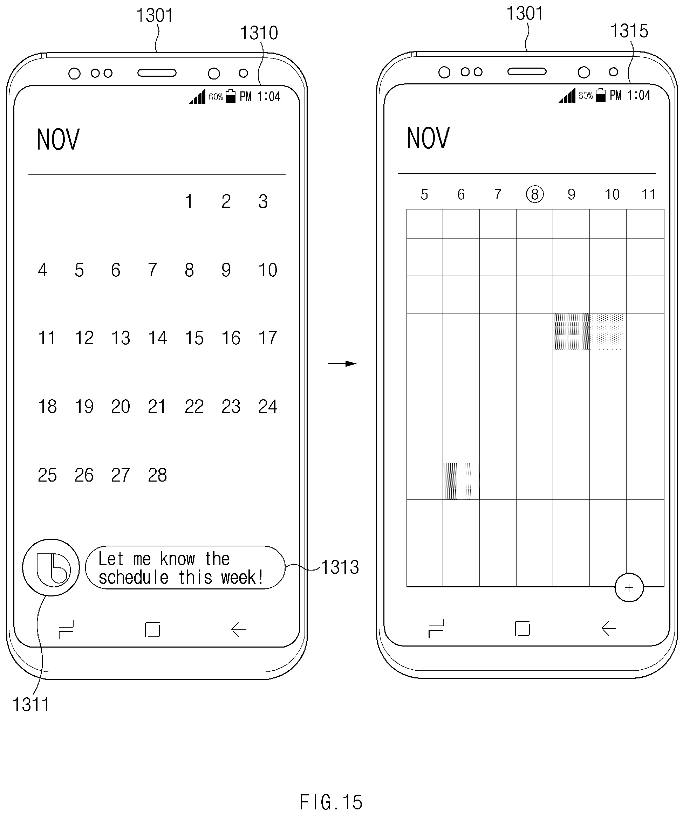

FIG. 15 is a diagram illustrating a user terminal displaying a screen for processing a voice input received through an intelligent application, according to an embodiment.

The user terminal 1301 may execute an intelligence app to process a user input through the intelligence server 1400 (e.g., the intelligence server 1400 in FIG. 13).

According to an embodiment, on a first screen 1310, when recognizing a specified voice input (e.g., wake up!) or receiving an input via a hardware key (e.g., a dedicated hardware key), the user terminal 1301 may launch an intelligence app for processing a voice input. For example, the user terminal 1301 may launch the intelligence app in a state where a schedule app is executed. According to an embodiment, the user terminal 1301 may display an object 1311 (e.g., an icon) corresponding to the intelligence app, on the display 1360. According to an embodiment, the user terminal 1301 may receive a voice input by a user utterance. For example, the user terminal 1301 may receive a voice input saying that "let me know the schedule of this week!". According to an embodiment, the user terminal 1301 may display a user interface (UI) 1313 (e.g., an input window) of the intelligence app, in which text data of the received voice input is displayed, on the display.

According to an embodiment, on a second screen 1315, the user terminal 1301 may display a result corresponding to the received voice input, on the display. For example, the user terminal 1301 may receive a plan corresponding to the received user input and may display 'the schedule of this week' on the display depending on the plan.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 10 comprising:
wireless communication circuitry 190;
at least one processor 120 electrically connected with the wireless communication circuitry; and
memory 130 storing instructions, wherein the instructions, when executed by the at least one processor individually or collectively, cause the electronic device to:
establish a first link with an audio device 15 using the communication circuitry,
receive a voice command from the audio device,
identify a domain or a task corresponding to the voice command,
identify capability of the electronic device for the identified domain or the identified task,
based on the capability of the electronic device being identified as negative, discover at least one external device using the wireless communication circuitry,
acquire, from a first external device among the at least one external device, capability of the first external device for the domain or the task, and
based on the capability of the first external device for the domain or the task being identified as positive, control the audio device to be connected with the first external device.

2. The electronic device of Claim 1,
wherein the instructions, when executed by the at least one processor individually or collectively, further cause the electronic device to identify the capability of the electronic device based on at least one of network connectivity, an application associated with the task, or context information of the electronic device.

3. The electronic device of Claim 2,
further comprising at least one sensor circuitry 170,
wherein the instructions, when executed by the at least one processor individually or collectively, further cause the electronic device to:
acquire context information of the electronic device using the at least one sensor circuitry, and
identify the capability of the electronic device as being negative when the context information indicates that the electronic device is in a blocked situation.

4. The electronic device of Claim 1,
wherein the instructions, when executed by the at least one processor individually or collectively, further cause the electronic device to:
based on the capability of the electronic device being identified as negative, discover a plurality of external devices using the communication circuitry, the plurality of external devices including the first external device,
acquire capability information of the plurality of external device for the task, and
select the first external device based on the capability information of the plurality of external devices.

5. The electronic device of Claim 4,
wherein the instructions, when executed by the at least one processor individually or collectively, further cause the electronic device to:
identify, based on the capability information of the plurality of external devices, priorities of the plurality of external devices, and
select the first external device with the highest priority among the plurality of external devices.

6. The electronic device of Claim 5,
wherein a priority for each of the plurality of external devices is based on at least one of a distance relative to the electronic device or a blockage

7. The electronic device of any one of Claims 1 to 6,
wherein the voice command indicates playback of a media, and
wherein the first external device is a device storing the media.

8. The electronic device of any one of Claims 1 to 6,
wherein the instructions, when executed by the at least one processor individually or collectively, further cause the electronic device to:
based on the capability of the first external device being identified as positive, release the first link with the audio device, and
after the first link being released, receive, from the first external device, a signal indicating establishment of a second link between the first external device and the audio device.

9. The electronic device of Claim 8,
wherein the instructions, when executed by the at least one processor individually or collectively, further cause the electronic device to:
release the first link and cause the audio device to perform a scan to connect with the first external device by transmitting a signal indicating a release of the first link.

10. The electronic device of any one of Claims 1 to 6,
wherein the instructions, when executed by the at least one processor individually or collectively, further cause the electronic device to:
based on the capability of the first external device being identified as positive, cause the first external device to communicate with the audio device over the first link by transmitting information of the first link to the first external device.

11. A method for controlling a connection of an electronic device, the method comprising:
establishing a first link with an audio device;
receiving a voice command from the audio device;
identifying a domain or a task corresponding to the voice command;
identifying a capability of the electronic device for the domain or the task;
based on the capability of the electronic device being identified as negative, discovering at least one external device 200;
acquiring, from a first external device among the at least one external device, capability of the first external device for the domain or the task; and
based on the capability of the first external device for the domain or the task being identified as positive, controlling the audio device to be connected with the first external device.

12. The method of claim 11, further comprising:
identifying the capability of the electronic device based on at least one of network connectivity, an application associated with the task, or context information of the electronic device.

13. The method of claim 12,
wherein the identifying the capability of the electronic device includes:
acquiring context information of the electronic device using at least one sensor circuitry of the electronic device; and
identifying the capability of the electronic device as being negative when the context information indicates that the electronic device is in a blocked situation.

14. The method of claim 11, further comprising:
based on the capability of the electronic device being identified as negative, discovering a plurality of external devices, the plurality of external devices including the first external device;
acquiring capability information of the plurality of external device for the task; and
selecting the first external device based on the capability information of the plurality of external devices.

15. The method of claim 14,
wherein the selecting the first external device includes:
identifying, based on the capability information of the plurality of external devices, priorities of the plurality of external devices, and
selecting the first external device with the highest priority among the plurality of external devices.
